# EUROPÄISCHE PATENTSCHRIFT

(11) **EP 3 749 489 B1**
(45) Veröffentlichungstag und Bekanntmachung des Hinweises auf die Patenterteilung: **22.03.2023**
(21) Anmeldenummer: 18735538.3
(22) Anmeldetag: 26.06.2018
(51) Int. Cl.: B25F 5/00, A62B 3/00

(54) **TRAGBARES ARBEITSGERÄT FÜR DEN PORTABLEN EINSATZ**
PORTABLE TOOL FOR MOBILE USE
APPAREIL DE TRAVAIL PORTATIF POUR L'UTILISATION PORTABLE

(43) Veröffentlichungstag der Anmeldung: 16.12.2020
(60) Teilanmeldung: 23152159.2
(73) Patentinhaber: Lukas Hydraulik GmbH, 91058 Erlangen (DE)
(72) Erfinder: SAUERBIER, Carsten, 91207 Lauf an der Pegnitz (DE); KIRCHNER, Uwe, 91080 Marloffstein (DE)
(74) Vertreter: Stippl Patentanwälte
(86) Internationale Anmeldenummer: PCT/EP2018/067010
(87) Internationale Veröffentlichungsnummer: WO 2020/001740

(56) Entgegenhaltungen:
- EP-A1- 1 485 169
- WO-A1-2014/005839
- WO-A1-2017/190799
- US-A1- 2018 021 603

## Beschreibung

Die vorliegende Anmeldung betrifft ein elektrohydraulisches Arbeitsgerät für den portablen Einsatz wie z.B. ein Spreizgerät, Schneidgerät oder Kombigerät mit Schneid- sowie Spreizfunktion oder einen Hebezylinder (bzw. Rettungszylinder). Die vorgenannten dienen vorzugsweise jeweils dem Rettungseinsatz. Die Erfindung betrifft ein tragbares Arbeitsgerät gemäß dem Oberbegriff des Patentanspruchs 1.

### Technologischer Hintergrund

Portable, von einer Bedienungsperson tragbare, motorisch angetriebene elektromechanische oder elektrohydraulische Arbeitsgeräte oder Rettungsgeräte der hier interessierenden Art werden bei vielfältigen Anwendungen eingesetzt. So gibt es beispielsweise Spreizgeräte, Schneidgeräte oder sogenannte Kombigeräte, d.h. Geräte mit Schneid- sowie Spreizfunktion und Rettungszylinder, die von Einsatzkräften (Feuerwehr) beispielsweise dazu verwendet werden, verletzte Personen aus Unfallfahrzeugen zu bergen oder Erdbebenopfer zu befreien. Die Art der Arbeitsgeräte bzw. der Rettungsgeräte ist hierbei vielfältig. Es gibt elektrohydraulisch oder elektromechanisch angetriebene Arbeitsgeräte bzw. Rettungsgeräte mit, vorzugsweise gehärteten, Werkzeugeinsätzen zum Schneiden, Spreizen oder zum Drücken. Derartige Geräte werden im Einsatz extremen hohen mechanischen Anforderungen ausgesetzt und sind je nach Einsatzort unterschiedlichsten Umwelteinflüssen (Hitze, Kälte, Feuchtigkeit) unterworfen.

Hierbei ist es von besonderer Bedeutung, dass insbesondere Rettungsgeräte im Einsatz eine ganz besonders hohe Betriebszuverlässigkeit gewährleisten, da Rettungseinsätze stets schnell durchgeführt werden müssen und überraschende Betriebsausfälle deshalb fatale Folgen haben können.

Des Weiteren werden derartige Arbeitsgeräte während ihres Einsatzes mit der Zeit immer höheren mechanischen Belastungen ausgesetzt. Dies liegt daran, dass z.B. im Bereich des Automobilbaus immer höherfeste Werkstoffe zum Einsatz kommen, die z.B. von einem Schneidgerät durchtrennt werden müssen. Aber auch die Bedienung solcher Arbeitsgeräte erfordert viel Erfahrung. Wird beispielsweise ein Schnitt an einer sogenannten B-Säule eines Pkw mittels eines Schneidgeräts vorgenommen, dringen die beiden Schneiden des Schneidgeräts zunächst zügig in das Material ein. Danach bremst sich der Schneidvorgang ab und es kommt zum Stillstand des Schneidvorgangs. Bei ausreichender Kraft auf die Schneidwerkzeuge bilden sich Mikrorisse, die im Material wandern. Man kann diese Mikrorisse mit bloßem Auge nicht erkennen. Unerfahrene Bedienpersonen denken, das Gerät habe seine Leistungsgrenze erreicht, setzten das Schneidgerät in dieser Situation ab und beginnen den Schnitt dann von neuem. Eine erfahrene Bedienperson wartet in einer solchen Situation demgegenüber eine gewisse Zeitdauer weiter ab, wobei die Volllast der beiden Schneiden auf das Schnittgut bestehen bleibt. Während dieser Zeitdauer wandern die Mikrorisse weiter bis aufgrund der anliegenden Last durch die Schneiden das Material aufgrund des Fortschreitens der Mikrorisse und daraus resultierenden Makrorissen schließlich abreißt. Demgegenüber kann aber auch eine Situation vorliegen, bei der das zu schneidende Material tatsächlich zu hart ist und ein zu langes Warten auf Volllast nicht zu dem gewünschten Abtrennen des Materials führt. Diese Situationen zu erkennen ist demzufolge bislang schwierig gewesen.

Ein weiteres Problem derartiger Geräte besteht darin, dass die Öffnungs- und Schließzeiten bei den in Rede stehenden Arbeitsgeräten je nach Einsatzsituation sehr lang sein können. So ist beispielsweise ein Rettungszylinder im eingefahrenen Zustand 40 cm und im ausgefahrenen Zustand demgegenüber 150 cm lang. Demzufolge kann es vorkommen, dass zum Ausfahren des Rettungszylinders in die benötigte Länge der Kolben relativ lange Zeit benötigt, bis er in der erforderlichen Länge ausgefahren ist. Da es sich im Rettungseinsatz immer um eine möglichst schnell durchzuführende Bergung handelt, besteht ein dringendes Bedürfnis, die Öffnungs- und Schließzeiten bei Arbeitsgeräten mit einer verfahrbaren Kolbenstange möglichst kurz zu halten.

Zwar weisen elektrohydraulische Arbeitsgeräte hydraulische Proportionalventile auf. Hierdurch lassen sich jedoch die Öffnungs- und Schließzeiten des Arbeitsgeräts nur unwesentlich beeinflussen.

### Druckschriftlicher Stand der Technik

Aus dem YouTube Video E-FORCE 2 Spreaders: Performance & Handling | Weber Rescue UK, veröffentlicht: 23.01.2016 sowie der Betriebsanleitung Akku-Rettungsgeräte E-FORCE 2, Weber-Hydraulik GmbH, veröffentlicht: 2016 sind Akku-Rettungsgeräte bekannt, bei denen der Motor von einer Bedienungsperson mittels einer Steuerwippe im Leerlauf in den Arbeitszustand umgeschaltet werden kann. Die Drehzahl des Motors ist im Arbeitszustand höher als im Leerlauf. Wird die Steuerwippe von der Bedienungsperson losgelassen, geht der Motor in den Leerlauf zurück. Die Betriebsanleitung Akku-Rettungsgeräte E-FORCE 2, Weber-Hydraulik GmbH, veröffentlicht: 2016 offenbart ein Arbeitsgerät gemäß dem Oberbegriff des Patentanspruchs 1.

Die US 2018/0117745 A1 beschreibt einen akkubetriebenen Schlagschrauber, bei dem eine Bedienperson mittels eines Modus-Umschalters zwischen einem Low-speed-Modus, einem Medium-speed-Modus und einem High-speed-Modus eines bürstenlosen Gleichstrommotors wählen kann. Bei den Modi sind jeweils unterschiedliche Motorgeschwindigkeiten vorgesehen.

Die WO 2012/019758 A1 beschreibt eine Steuereinrichtung für ein erstes und zweites Arbeitsgerät, bei dem die Steuerung der Förderleistung von zwei parallel geschalteten Pumpen über ein einziges hydraulisches Schaltventil erfolgt, indem die Förderleistung der beiden Pumpen entweder ausschließlich einer ersten Druckleitung oder ausschließlich einer zweiten Druckleitung oder erster und zweiter Druckleitung zusammen in einem bestimmten Verhältnis zueinander zur Verfügung steht. Die Auswahl erfolgt über die jeweilige Stellung des hydraulischen Steuerventils.

Aus der WO 2013/127452 A1 ist ein Verfahren zum Betrieb einer Hydraulikpumpenanordnung bekannt, bei dem eine lastabhängige Steuerung in Abhängigkeit des Motorstroms erfolgt, derart, dass in Abhängigkeit davon von einem Lastzustand in einen Nichtlastzustand und umgekehrt geschaltet wird. Das Verfahren dient dazu, Energie zu sparen und somit den Akku zu schonen.

### Aufgabe der vorliegenden Erfindung

Die Aufgabe der vorliegenden Erfindung besteht darin, die Einsatzeffektivität einer gattungsgemäßen Hydraulikpumpenanordnung für ein Arbeitsgerät für den portablen Einsatz zu verbessern.

### Lösung der Aufgabe

Die vorstehende Aufgabe wird durch die Merkmale des Anspruchs 1 gelöst. Zweckmäßige Ausgestaltungen der vorliegenden Erfindung sind in den weiteren Ansprüchen beansprucht.

Gemäß der Erfindung legt die elektronische Steuer- und Regeleinheit neben einem ersten Betriebszustand, bei dem der Elektromotor mit einer ersten Frequenz F1 betrieben wird, einen zweiten Betriebszustand fest, bei dem der Elektromotor mit einer zweiten Frequenz F2 betrieben wird, wobei mittels manuell bedienbarer Umschaltmittel der Betriebszustand von der Bedienungsperson des Arbeitsgeräts zwischen ersten und zweiten Betriebszustand umschaltbar ist und wobei die Drehzahl des Elektromotors bei der zweiten Frequenz F2 höher ist als bei der ersten Frequenz F1. Hierdurch kann die Kolbenstange bei Bedarf durch Umschaltung auf die zweite Frequenz F2 wesentlich schneller aus- bzw. eingefahren werden als bei bisherigen Arbeitsgeräten. Hierdurch kann auf eine Anordnung aus zwei parallel geschalteten separaten Pumpen, die jeweils von zugehörigen Elektromotoren angetrieben werden müssen, verzichtet werden. Die Funktion der Umschaltung des Elektromotors auf die zweite Frequenz F2 (Turbobetrieb) kann in einfacher Weise in einem tragbaren, akkubetriebenen Arbeitsgerät umgesetzte werden. Die Höhe der auszuwählenden Frequenz bestimmt dabei die Drehzahl des Elektromotors und ist frei wählbar. Je höher die Frequenz, desto schneller dreht sich der Elektromotor zum Antrieb einer nachgeschalteten Mechanik oder einer nachgeschalteten Hydraulikpumpe. Bei dem Elektromotor handelt es sich erfindungsgemäß um einen bürstenlosen Gleichstrommotor (bzw. "Electronically Commutated Motor" bzw. "ECM-" oder "EC-Motor").

Das Umschalten von der ersten Frequenz F1 auf die zweiter Frequenz F2 ist zweckmäßigerweise nur in einem Teilbereich des gesamten Leistungsspektrums des Elektromotors möglich. Insbesondere ist bei elektrohydraulischen Arbeitsgeräten ab einem vorbestimmten Druck (z.B. 500 bar) eine Umschaltung in den zweiten Betriebszustand nicht mehr möglich. Hierdurch werden mechanische Probleme im Hydraulikkreislauf vermieden.

Vorzugsweise erfolgt die Umschaltung jeweils zwischen konstanten Frequenzen F1 bzw. F2.

Erfindungsgemäß wird die Möglichkeit der Umschaltung von der ersten Frequenz F1 auf die zweite Frequenz F2 strombedarfsabhängig vorgenommen. Beispielsweise kann ein Strombedarf-Schwellwert SW vorgegeben sein, oberhalb dessen das Umschalten von der ersten Frequenz F1 auf die zweite Frequenz F2 oder ein Betrieb des Arbeitsgeräts bei der zweiten Frequenz F2 nicht mehr möglich ist. Diese Maßnahme dient dazu, eine Plausibilitätsprüfung dahingehend vorzunehmen, ob ein Betriebszustand vorliegt, bei dem aktiv gearbeitet (geschnitten, gespreizt oder gedrückt) wird oder bei dem lediglich die Werkzeuge geöffnet oder geschlossen werden sollen. Wenn das Schneidwerkzeug des Arbeitsgeräts zum Beispiel bereits in das Material eingedrungen ist, kann keine Umschaltung von erster Frequenz F1 auf zweite Frequenz F2 erfolgen.

Dadurch, dass ein hydraulisches Steuerventil (hydraulisches Mehrwegeventil) für das Umschalten der Bewegungsrichtung der Kolbenstange vorgesehen ist und mit Betätigung des Steuerventils auch die Umschaltung des Betriebszustands zwischen erstem und zweitem Betriebszustand erfolgt, bleibt die Intuitivität der Benutzung des Arbeitsgeräts für die Bedienungsperson erhalten, was für den Rettungseinsatz von Vorteil ist. Die Bedienungsperson schaltet bezüglich der Bewegungsrichtung der Kolbenstange sowie des Betriebszustands des Elektromotors ausschließlich das Steuerventil. Die Bedienungsperson bedient das Rettungsgerät wie immer. Es gibt nur eine zusätzliche Bedienungsfunktion an dem ansonsten unveränderten Steuerventil.

Sofern das Steuerventil ein Drehventil ist, welches insbesondere einen ringförmigen Griff oder Sterngriff umfasst, kann die Auslösung der Umschaltung des Betriebszustands zwischen erstem und zweitem Betriebszustand durch einfaches Drehen des Steuerventils um einen zusätzlichen Winkelbereich Δα zu dem eigentlichen Winkelbereich der Betätigung des Steuerventils erfolgen. Die Bedienungsperson dreht somit zur Umschaltung des Elektromotors vom ersten in den zweiten Betriebszustand das Drehventil lediglich um den zusätzlichen Winkelbereich Δα.

Zweckmäßigerweise handelt es sich bei dem Steuerventil um ein sogenanntes Proportionalventil, bei dem die Übergänge der Ventilstellungen stetig verlaufen, wodurch veränderliche Volumenströme erzielt werden können. Die erfindungsgemäße Umschaltmöglichkeit von dem ersten in den zweiten Betriebszustand ist dem Proportionalventil übergelagert und vergleichbar mit einer Art "Kick-Down"-Funktionalität.

Dadurch, dass die während des Betriebs durch den gezogenen Strom A des Elektromotors entstehende Wärme W erfasst und als Steuerungsvariable verwendet wird, können schädliche Einflüsse wegen eines zu langen Überlastbetriebs wirksam vermieden werden. Gleichzeitig kann die Bedienungsperson aber auch besser als bisher "an die Grenze gehen" ohne ständig überlegen zu müssen, ob der aktuelle Betriebszustand noch diesseits oder schon jenseits der Belastungsgrenze liegt. Individuelle Erfahrungslevels von Bedienungspersonen werden hierdurch unbeachtlich. Die Erfolgsaussichten eines Einsatzes steigen. Die Einsatzeffektivität der gattungsgemäßen Hydraulikpumpenanordnung wird hiermit erheblich verbessert.

Vorzugweise wird die während des Betriebs durch den gezogenen Strom des Elektromotors entstehende Wärme W in der oder zumindest im lokalen Bereich der elektronischen Steuer- und Regeleinheit, insbesondere im Bereich der Platine bzw. Halbleiterbaugruppen (z.B. im Bereich der IGFETs oder MOSFETs) derselben erfasst. Vor allem dort entsteht die während des Betriebs durch den gezogenen Strom A des Elektromotors entstehende Wärme W und kann daher dort besonders gut erfasst werden.

Zur Erfassung der Wärme W bzw. der Temperatur bzw. des Temperaturanstiegs kann ein erster Temperaturfühler oder Temperatursensor vorgesehen sein, der die während des Betriebs durch den gezogenen Strom des Elektromotors entstehende Wärme W erfasst und an die elektronische Steuer- und Regeleinheit weiterleitet. Hierbei kann es sich um ein elektrisches oder elektronisches Bauelement handeln, das ein elektrisches Signal als Maß für die Temperatur liefert. Insbesondere kann es sich um Bauteile handeln, die bei Temperaturänderung ihren Widerstand verändern (z.B. PTCs, NTCs) oder Bauteile, die direkt ein verarbeitbares elektrisches Signal liefern (z.B. integrierte Halbleiter-Temperatursensoren (Festkörperschaltkreise) oder die Temperaturabhängigkeit der Basis-Emitter-Spannung eines als Diode geschalteten Transistors nutzen.

Der Elektromotor kann insbesondere derart konzipiert sein, dass die Drehzahl des Elektromotors während des Arbeitseinsatzes beim Eintreten einer Belastung, zumindest im Wesentlichen, konstant bleibt und durch das Eintreten einer Belastung lediglich der vom Elektromotor gezogene Strom ansteigt.

Ferner kann die Umgebungstemperatur T am Arbeitsgerät zusätzlich erfasst und bei der Steuerung mit einbezogen werden. Hierdurch kann insbesondere die Summe oder bei Bedarf das Verhältnis von während des Betriebs durch den gezogenen Strom A des Elektromotors entstehenden Wärme W und Umgebungstemperatur T am Arbeitsgerät zur Steuerung zusätzlich herangezogen werden. Dies ist von Vorteil, da die Umgebungstemperatur einen zusätzlichen Einfluss auf die Wärmeentwicklung der Halbleiterbaugruppen hat und zudem bei einem Schaltvorgang eine Wärmeentwicklung aufgrund des gezogenen Strom A des Elektromotors zeitverzögert einsetzten kann. Mit zusätzlicher Erfassung der Umgebungstemperatur kann somit die Wärmeentwicklung noch exakter erfasst werden.

Zweckmäßigerweise umfasst die Hydraulikpumpenanordnung für die Erfassung der Umgebungstemperatur T einen zweiten Temperaturfühler. Hierbei kann es sich um ein elektrisches oder elektronisches Bauelement, das ein elektrisches Signal als Maß für die Temperatur liefert, handeln. Insbesondere kann es sich um Bauteile handeln, die bei Temperaturänderung ihren Widerstand verändern (z.B. PTCs, NTCs) oder Bauteile, die direkt ein verarbeitbares elektrisches Signal liefern (z.B. integrierte Halbleiter-Temperatursensoren (Festkörperschaltkreise) oder die Temperaturabhängigkeit der Basis-Emitter-Spannung eines als Diode geschalteten Transistors nutzen.

Im Rahmen der Steuerung kann eine Begrenzung des vom Elektromotor gezogenen Stroms A und/oder eine vollständige Abschaltung des Elektromotors erfolgen. In beiden Fällen führt diese Maßnahme zu einem Abbau der Überhitzung bzw. Wärme und somit zu einer wirkungsvollen Schutzmaßnahme des Betriebs des Arbeitsgeräts.

Der die Begrenzung des vom Elektromotor gezogenen Stroms A und/oder die Abschaltung des Elektromotors bewirkender Schaltvorgang erfolgt zweckmäßigerweise unter Berücksichtigung einer zeitlichen Verzögerung t. Dies ist von Vorteil, da hierdurch eine zeitverzögert eintretende Überhitzung vermieden werden kann.

Zur Festlegung bzw. Feststellung der zeitlichen Verzögerung t kann vorteilhaft die Umgebungstemperatur T zusätzlich herangezogen werden.

Vorzugsweise umfasst das erfindungsgemäße Arbeitsgerät eine Anzeigeeinrichtung, die wiederum folgendes umfasst:
- eine Lastanzeige, bei der die Leistung des Arbeitsgeräts auf der Grundlage des während des Betriebs vom Elektromotor gezogenen Stroms A angezeigt wird, und/oder
- eine Betriebszustandsanzeige, die zeigt, in welchem Betriebszustand sich das Arbeitsgerät befindet oder ob sich das Arbeitsgerät im zweiten Betriebszustand befindet, und/oder
- eine Volllast-Betriebszustandsanzeige, die zeigt, dass eine Volllast-Dauer überschritten ist, und/oder
- eine Temperaturanzeige, die zeigt, in welchem Bereich sich die aktuelle Betriebstemperatur der Halbleiterbauelemente befindet.

Die Lastanzeige zeigt der Betriebsperson an, ob sich das Arbeitsgerät in einem Zustand befindet, bei dem zusätzlich noch Last generiert werden kann oder Volllastbetrieb besteht. Die Lastanzeige kann beispielsweise als Leuchtbalkenanordnung realisiert sein. Die Betriebszustandsanzeige gibt der Bedienungsperson Auskunft darüber, ob sich das Arbeitsgerät im ersten oder im zweiten Betriebszustand befindet. Die Volllast-Betriebszustandsanzeige zeigt, dass eine Volllast-Dauer überschritten ist, so dass die Bedienungsperson den Betrieb unterbrechen kann, um z. B. das Arbeitsgerät neu anzusetzen. Die Temperaturanzeige gibt der Bedienungsperson einen Hinweis dahingehend, in welchem Bereich sich die Temperatur der Halbleiterbaugruppe befindet, insbesondere in welchem Bereich eines möglichen Gesamtbereichs sich die aktuelle Betriebstemperatur befindet.

Vorzugsweise kann die Lastanzeige einen Warnmodus beinhalten, der aufzeigt, dass das Arbeitsgerät sich aktuell im Überlastbereich befindet. Die Bedienungsperson erfährt hierdurch, dass der Arbeitsvorgang abgebrochen werden soll. Die Einsatzeffektivität wird damit erheblich gesteigert.

Zweckmäßigerweise umfasst das Arbeitsgerät Folgendes:
- eine Hydraulikpumpe,
- einen Hydrauliktank,
- eine Kolbenstange,
- einen Hydraulikzylinder zur Aufnahme der verfahrbaren Kolbenstange,
- Hydraulikleitungen und/oder
- eine Ausgleichseinrichtung.

### Beschreibung der Erfindung anhand von Ausführungsbeispielen

Nachstehend wird eine zweckmäßige Ausgestaltung der vorliegenden Erfindung näher beschrieben. Wiederkehrende Merkmale sind der Übersichtlichkeit halber lediglich einmal mit einem Bezugszeichen versehen. Es zeigen:
- Fig. 1: die Darstellung einer Gesamtansicht eines Arbeitsgeräts in Form eines elektro-hydraulischen, batteriebetriebenen Schneidgeräts;
- Fig. 2: ein Beispiel eines hydraulischen Schaltplans des Schneidgeräts gemäß Fig. 1;
- Fig. 3: eine stark vereinfachte schematische Darstellung der wesentlichen Komponenten des Überlastschutzes des Arbeitsgeräts gemäß Fig. 1;
- Fig. 4: eine stark vereinfachte schematische Darstellung der funktionellen Schaltstellungen des Steuerventils des Arbeitsgeräts gemäß Fig. 1;
- Fig. 5: ein Ablaufdiagramm zur Steuerung der Motorleistung des Arbeitsgeräts gemäß den Fig. 1 und 2;
- Fig. 6: eine vergleichende Darstellung der Erwärmung der Elektronik des Arbeitsgeräts nach Fig. 1 bei unterschiedlichen Umgebungstemperaturen; sowie
- Fig. 7: ein Beispiel einer Anzeigevorrichtung für die Leistung des Arbeitsgerät gemäß Fig. 1.

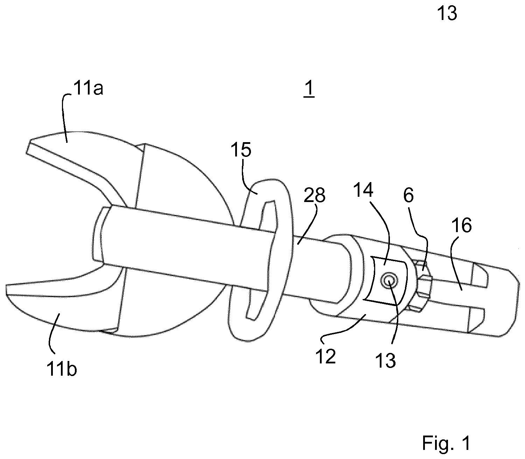

Bezugszeichen 1 in Fig. 1 bezeichnet das erfindungsgemäße Arbeitsgerät in seiner Gesamtheit. Bei der Ausgestaltung gemäß Fig. 1 ist das Arbeitsgerät 1, z.B. ein elektro-hydraulisches, batteriebetriebenes Schneidgerät (Cutter). Das Arbeitsgerät 1 umfasst ein Gehäuse 12, in dem sich ein Elektromotor 3, eine Hydraulikpumpe 2 sowie ein Hydrauliktank 19 befinden. Darüber hinaus ist eine Ausgleichseinrichtung 17 zum Volumenausgleich der Hydraulikflüssigkeit während des Betriebs des Arbeitsgeräts 1 vorgesehen. Hierbei kann es sich z.B. um eine flexible Membran oder dergleichen handeln. Am Gehäuse 12 angebracht ist ein Display 14 sowie ein Ein-/Ausschalter 13. An dem Display 14 können die Betriebszustände von der Bedienungsperson abgelesen werden.

An der Vorderseite des Arbeitsgeräts 1 befinden sich zwei Werkzeughälften 11a, 11b, welche bei der in Fig. 1 dargestellten Ausgestaltung Schneidwerkzeughälften sind. Die beiden Schneidwerkzeughälften 11a, 11b werden über eine (in Fig. 1 nicht dargestellte) Kolbenstange angetrieben. Letztere befindet sich in einem (ebenfalls nicht dargestellten) Hydraulikzylinder. Der Hydraulikzylinder befindet sich unterhalb einer aus Fig. 1 ersichtlichen Abdeckung 28, im Bereich welcher sich ein erster Handgriff 15 befindet. Ein zweiter Handgriff 16 ist am Gehäuse 2 vorgesehen. Das Arbeitsgerät 1 kann somit von der Bedienungsperson mit zwei Händen geführt bzw. bedient werden. An der Rückseite des Gehäuses 12 ist ein (in Fig. 1 nicht ersichtlicher) Einschubschacht für einen Akku vorgesehen. Über ein Hydraulikventil 6 kann die Bedienungsperson mit der am zweiten Handgriff 16 befindlichen Hand manuell die Richtung des Hydraulikstroms steuern, sodass die Kolbenstange entweder eingefahren wird (wobei die Werkzeughälften 11a, 11b geschlossen werden) oder ausgefahren wird (wobei die Werkzeughälften 11a, 11b geöffnet werden) oder Hydrauliköl in den Versorgungskreislauf zurückgeleitet wird (Bypassbetrieb). Bei der in Fig. 1 dargestellten Ausgestaltung des Steuerventils 6 handelt es sich um ein in der Verlängerung der Achse des Handgriffs 16 drehbares Steuerventil mit einem sogenannten Sterngriff, welcher zur Ansteuerung der Schaltpositionen von der Bedienungsperson gedreht wird.

Die hier in Rede stehenden Arbeitsgeräte sind in der Lage, in jeglicher räumlicher Anordnung oder Ausrichtung betrieben zu werden.

Neben dem vorbeschriebenen Schneidgerät kann die Erfindung auch ein Spreizgerät, ein Kombigerät mit Schneid- sowie Spreizfunktion oder einen Hebe- bzw. Rettungszylinder umfassen. Bei all diesen Geräten kommt eine Kolbenstange, die in einem Zylinder, z.B. Hydraulikzylinder geführt ist, zum Einsatz.

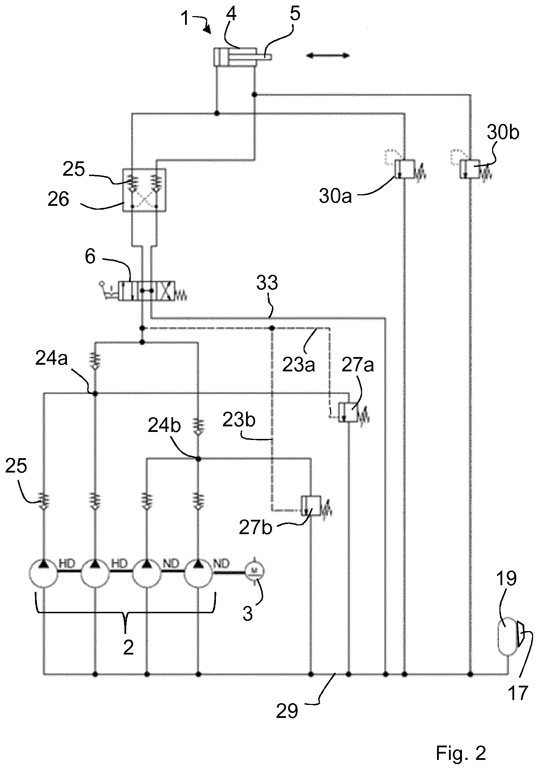

Fig. 2 zeigt ein Beispiel eines hydraulischen Schaltplans des Arbeitsgeräts nach Fig. 1. Bei der Pumpe 2 handelt es sich z. B. um eine Kolbenpumpe mit z. B. vier Zylindern, wobei zwei Zylinder für Hochdruck (HD) und zwei Zylinder für Niederdruck (ND) vorgesehen sind. Der jeweilige zweite Strang (HD, ND) wird zeitversetzt zum ersten Strang mit Druck beaufschlagt, um Hochdruck (HD) oder Niederdruck (ND) zu erzeugen. Die Kolben der Pumpe werden von dem Elektromotor 3 angetrieben. In einem Hydrauliktank 19, an dem eine Ausgleichseinrichtung 17 zum Volumenausgleich an Hydraulikflüssigkeit während des Betriebs, beispielsweise in Form einer flexiblen Membran, vorgesehen sein kann, wird Hydraulikflüssigkeit bereitgehalten. Jeder HD- sowie ND- Ausgang der Pumpe 2 steht mit dem Steuerventil 6 in Verbindung, bei dem es sich z.B. um ein Mehrwegeventil mit drei Schaltstellungen handelt, sowie mit einem ansteuerbaren Entlastungsventil 27a, 27b. Jedes Entlastungsventil 27a, 27b steht über eine Steuerleitung 23 a, 23b mit der Eingangsseite des Steuerventils 6 in Verbindung.

Bei der in Fig. 2 linken Schaltstellung des Steuerventils 6 wird Druck (HD oder ND) im Bereich der der Kolbenstange 5 abgewandten Seite des Hydraulikzylinders 4 aufgebaut, wodurch die Kolbenstange 5 ausgefahren wird, wohingegen bei der in Fig. 2 rechts dargestellten Schaltstellung des Steuerventils 6 ein entsprechender Druck auf der gegenüberliegenden Seite des Hydraulikzylinders 4 aufgebaut wird, sodass hierbei die Kolbenstange 5 eingefahren wird. Die jeweils durch diese Betätigung verdrängte Hydraulikflüssigkeit wird über die Tankleitung 33 zurück in den Hydrauliktank 19 geleitet.

Die Mittelstellung des Steuerventils 6 stellt diejenige Stellung dar, bei der Hydraulikflüssigkeit im Bypass-Betrieb gefördert wird, ohne dass die Kolbenstange 5 bewegt wird.

Wird die Pumpe 2 beispielsweise im Hochdruckmodus gefahren, so teilt sich der Arbeitsdruck an einem ersten Knotenpunkt 24a in Richtung Steuerventil 6 sowie angesteuertem Entlastungsventil 27a. Über die Steuerleitung 23a wird bei einem Anlegen von Hochdruck (HD) das Entlastungsventil 27a geschlossen. Über eine weitere Steuerleitung 23b wird das Entlastungsventil 27b mit einem Steuerdruck beaufschlagt. Der Förderstrom der Niederdruckelemente (ND) teilt sich an einem zweiten Knotenpunkt 24b ebenfalls auf und wird in Richtung Steuerventil 6 sowie Entlastungsventil 27b geführt. Ist der Steuerdruck am Entlastungsventil 27b nun höher als der Druck der Niederdruckelemente, so wird das Entlastungsventil 27b geöffnet und der Förderstrom der Niederdruckelemente in den Tank 19 zurückgeführt.

Wir die Pumpe 2 alternativ dazu im Niederdruckmodus gefahren, so kann der Steuerdruck am Entlastungventil 27b nicht gegen den Förderstrom der Niederdruckelemente arbeiten. Beide Förderströme (Hoch- und Niederdruck) werden in Richtung des Steuerventils 6 geführt.

Zwischen Steuerventil 6 und Hydraulikzylinder 4 befindet sich ein Lasthaltelement 26. Das Lasthaltelement 26 umfasst sich kreuzende Steuerleitungen. Wenn z.B. in der linken Schaltstellung des Steuerventils 6 Druck von der Pumpe 2 ansteht, wird über eine der beiden Steuerleitungen das Rückschlagventil 25 des Lastelements 26 geöffnet, sodass Hydraulikflüssigkeit zurückfließen kann. Gleiches gilt für die rechte Schaltstellung des Schaltventils 6, nur mit umgekehrter Richtung.

Das Steuerventil 6 wird von Hand mittels einer Handhabe betätigt und ist federbelastet. Über die Handhabe des Steuerventils 6 muss die Federkraft sowohl für die linke als auch für die rechte Stellung des Steuerventils 6 überwunden werden. Sobald die Handhabe losgelassen wird, fährt das Steuerventil 6 selbsttätig in die Ausgangsstellung zurück (Mittelstellung). Zweckmäßigerweise kann es sich bei dem Steuerventil um ein sogenanntes Proportionalventil handeln, bei dem der Leitungsquerschnitt für die Hydraulikflüssigkeit kontinuierlich vergrößert oder reduziert wird, d.h. keine abrupten Übergänge existieren. Zwischen der Hydraulikpumpe 2 und dem Steuerventil 6 befinden sich jeweils Rückschlagventile 25.

Bei dem Elektromotor 3 handelt es sich insbesondere um einen sogenannten bürstenlosen Gleichstrommotor, welcher hinsichtlich seiner Drehzahl über eine Steuer- und Regeleinheit gesteuert bzw. geregelt werden kann.

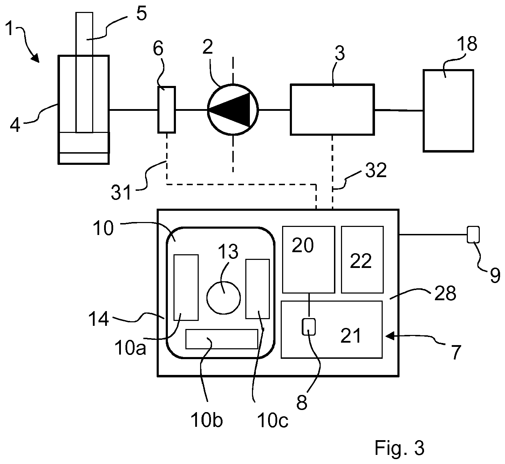

Fig. 3 zeigt eine stark vereinfachte schematische Darstellung der wesentlichen Komponenten eines Überlastschutzes des Arbeitsgeräts 1. Die Komponenten wie Hydraulikzylinder 4, Kolbenstange 5, Steuerventil 6, Pumpe 2, Elektromotor 3 sowie Akku 18 sind vereinfacht dargestellt. In Fig. 3 ist der Übersichtlichkeit halber bezüglich der Pumpe 2 lediglich ein einziges Pumpensymbol verwendet. Hydraulische Rückleitungen zum Tank sind der Übersichtlichkeit halber nicht dargestellt.

Zum Betrieb des Elektromotors 3 ist eine Steuer- und Regeleinheit 7 vorgesehen, welche das Display 14 aufweist. Die Steuer- und Regeleinheit 7 steht über eine Steuerleitung 32 mit dem Elektromotor 3 sowie eine Steuerleitung 31 mit dem Steuerventil 6 in Verbindung. Die Steuer- und Regeleinheit 7 umfasst einen Mikrocontroller 20 sowie einen Frequenzumrichter 21. Die Steuer- und Regeleinheit 7 bzw. der Mikrocontroller 20 können einen (nicht dargestellten) Speicher umfassen. Ferner umfasst die Steuer- und Regeleinheit 7 einen Stromdetektor 22, mit dem der vom Elektromotor 3 gezogene Strom detektiert werden kann.

Der am Arbeitsgerät untergebrachte Akku 18 stellt die elektrische Energie für den Elektromotor 3 bereit und zwar in Form einer Spannung und Strom. Die Spannung sinkt mit zunehmender Entladung des Akkus. Die elektrische Energie wird in den Frequenzumrichter 21 gespeist, welcher eine Mehrzahl sogenannter MOSFETs umfasst. Hierbei handelt es sich um elektronische Schalter, die einen bestimmten elektrischen Widerstand haben. Die Aufgabe des Frequenzumrichters 21 ist es, den Gleichstrom vom Akku 18 in einen Drehstrom umzuwandeln. Der Drehstrom zeichnet sich durch eine Spannung, einen Strom und eine Frequenz aus. Die Höhe der Frequenz bestimmt dabei die Drehzahl des Elektromotors 3. Je höher die Frequenz ist, desto schneller dreht sich der Elektromotor 3. Die Spannung bleibt hierbei im Wesentlichen konstant. Da ein schneller drehender Motor mehr Energie benötigt, stellt sich bei erhöhter Drehzahl des Motors ein entsprechend höherer Strombedarf ein. Hieraus wiederum resultiert eine Verlustleistung, die umso größer ist, je höher der vom Elektromotor 3 gezogene elektrische Strom ist. Die Verlustleistung wird in Wärme umgewandelt und heizt die MOSFETs des Frequenzumrichters 21 auf.

Durch die elektronische Steuer- und Regeleinheit 7 des Elektromotors 3 wird ein erster Betriebszustand festgelegt, bei dem der Elektromotor 3 mit einer ersten Frequenz F1 bzw. Drehzahl betrieben wird. Zusätzlich wird durch die elektronische Steuer- und Regeleinheit 7 ein zweiter Betriebszustand festgelegt, bei dem der Elektromotor 3 mit einer zweiten Frequenz F2 betrieben wird, wobei die Drehzahl des Elektromotors bei der zweiten Frequenz F2 höher ist als bei der ersten Frequenz F1. Ferner sind, manuell bedienbare, Umschaltmittel vorgesehen, die es der Bedienungsperson des Arbeitsgeräts 1 ermöglichen, zwischen erstem und zweitem Betriebszustand umzuschalten. Hierdurch kann währenddes Betriebs eine Art Turbofunktion im Sinne eines "Kick-downs" realisiert werden, bei der die Kolbenstange 5 des Hydraulikzylinders 4 besonders schnell bewegt werden kann, um die Werkzeuge möglichst rasch in die Arbeitsposition zu bringen. So kann beispielsweise ein Rettungszylinder sehr schnell aus einem eingefahrenen Zustand mit einer Länge von beispielsweise 40cm in einen ausgefahrenen Zustand mit einer Länge von z.B. 150cm gebracht werden.

Im Bereich des Frequenzumrichters 21 befindet sich ein erster Temperaturfühler 8, mit dem die Wärme, d.h. Verlustwärme, im Bereich des Frequenzumrichters 21 bzw. der darin befindlichen MOSFETs erfasst wird und einem Steuerungsprozess zugeführt wird.

Des Weiteren umfasst die Steuer- und Regeleinheit 7 einen zweiten Temperaturfühler 9, welcher dafür vorgesehen ist, die Umgebungstemperatur zu messen, welche ebenfalls in den Steuerungsprozess einbezogen werden kann. Der zweite Temperaturfühler 9 kann im Bereich einer (nicht dargestellten) Öffnung des Gehäuses 2 positioniert sein. Bei den Temperaturfühlern handelt es sich vorzugsweise um Bauteile, die bei Temperaturänderung ihren Widerstand verändern (z.B. PCTs, NTCs), oder Bauteile, die direkt ein verarbeitbares elektrisches Signal liefern (wie z.B. integrierte Halbleitertemperatursensoren (Festkörperschaltkreise) oder die Temperaturabhängigkeit der Basis-Emitterspannung eines als Diode geschalteten Transistors nutzen).

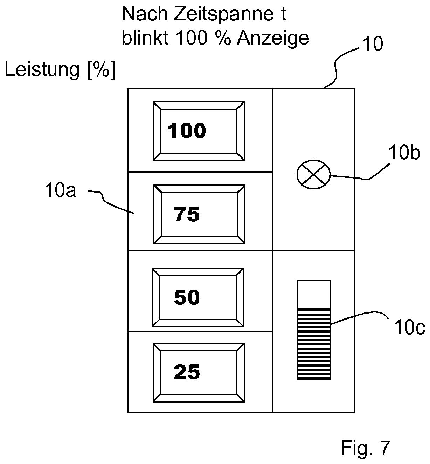

Das Display 14 umfasst eine Anzeigeeinrichtung 10, die wiederum z.B. eine Lastanzeige 10a und/oder Betriebszustandsanzeige 10b und/oder Temperaturanzeige 10c umfassen kann, vgl. auch Fig. 7.

Die Steuer- und Regeleinheit 7 sowie das Display 14 sind vorzugsweise auf einer gemeinsamen Platine 28 angeordnet. Sie können jedoch auch auf getrennten Platinen angeordnet sein.

Die Steuer- und Regeleinheit 7 ist mit dem Steuerventil 6 über die Steuerleitung 31 verbunden. Zweck dieser Maßnahme ist es, dass über das Steuerventil 6 die Bedienungsperson nicht nur die Bewegungsrichtung der Kolbenstange (Ausfahren, Einfahren bzw. Bypass-Stellung) steuern kann, sondern über ein vom Steuerventil 6 ausgelöstes Steuersignal auch die Umschaltung des Betriebszustands zwischen erster und zweiter Frequenz F1 bzw. F2 vornehmen kann. Die Bedienungsperson kann somit jederzeit während des Betriebs ohne am Steuerventil 6 abzulassen die Turbofunktion des Arbeitsgeräts 1 aktivieren oder deaktivieren.

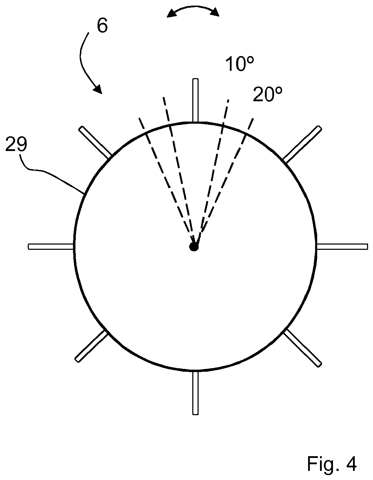

In Fig. 4 sind in vereinfachter schematischer Darstellung die verschiedenen Schaltstellungen des Steuerventils 6 des Arbeitsgeräts 1 beispielhaft gezeigt. Bei dem Steuerventil 6 in Fig. 4 ist lediglich das Betätigungselement desselben dargestellt, welches in diesem speziellen Fall ein sogenannter drehbarer Sterngriff 29 ist. In der in Fig. 4 dargestellten Position des Sterngriffs 29 befindet sich das Steuerventil 6 in seiner Mittellage, bei der die Kolbenstange 5 weder ein- noch ausgefahren wird, sondern lediglich Hydraulikflüssigkeit über das jeweilige Entlastungsventil 27a, 27b zurück zum Tank geleitet wird, ohne dass die Kolbenstange 5 bewegt wird. Wird der Sterngriff 29 nun um einen Winkel von z.B. 10° nach links in Fig. 4 gedreht, wird das Steuerventil 6 beispielsweise in der in Fig. 2 links dargestellten Schaltstellung gebracht. Wird der Sterngriff 29 demgegenüber um 10° nach rechts gedreht, wird das Steuerventil 6 in die in Fig. 2 rechte Schaltstellung gebracht. Die Umschaltung des Elektromotors von der niederen Frequenz F1 auf die höhere Frequenz F2 erfolgt ebenfalls über Betätigung des Sterngriffs 29. Vorzugsweise kann der Sterngriff 29 hierzu z.B. über einen Winkelbereich von 20° gedreht werden, um die Turbofunktion beim Einfahren oder Ausfahren der Kolbenstange 5 zusätzlich zu aktivieren. Hierdurch wird die Anwendung des Arbeitsgeräts 1 besonders erleichtert. Sobald die Bedienungsperson den Sterngriff 29 in der ausgelenkten Position loslässt, wird Letzterer bedingt durch Federkraft in die in Fig. 4 dargestellte Ausgangsstellung zurückgedreht. Wird der Sterngriff 29 lediglich in den Winkelbereich von 10° zurückgedreht, wird während des Ein- oder Ausfahrens der Kolbenstange 5 die Turbofunktion deaktiviert. Zwischen dem Winkel bzw. Winkelbereich des normalen und dem Winkel bzw. Winkelbereich der Turbofunktion kann ein per Kraft überwindbarer Schaltpunkt vorgesehen sein.

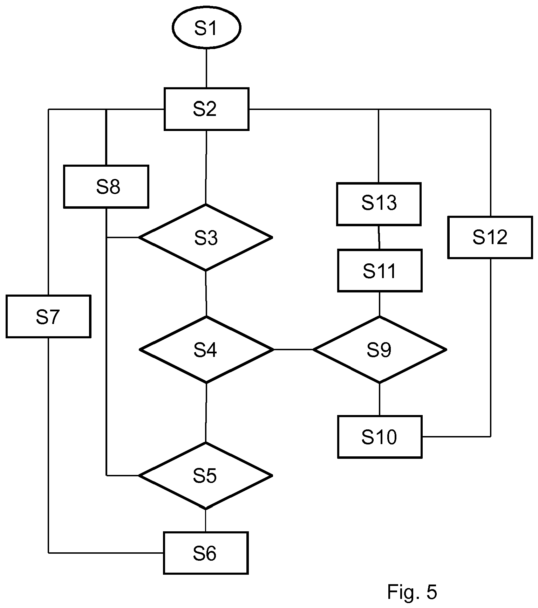

Nachstehend wird anhand von Fig. 5 die Steuerung der Turbofunktion sowie des Überlastschutzes näher erläutert. Zur Steuerung sind folgende Parameter vordefiniert:
- N0 = die untere Grenzdrehzahl (Drehzahl ohne Turbofunktion)
- Nmax = die obere Grenzdrehzahl (maximale Drehzahl mit Turbofunktion)
- N = die genau gemessene, aktuelle Drehzahl des Systems
- Na = die letzte gemessene Drehzahl, die im Speicher abgelegt ist
- Imax = der maximal vom Elektromotor gezogene Strom
- Tmax = die maximale Temperatur im Bereich des ersten Temperaturfühlers

Zunächst wird die zuletzt gemessene Drehzahl Na in einem ersten Schritt S1 auf die untere Grenzdrehzahl N0 gesetzt. In einem Schritt S2 werden die aktuelle Drehzahl N, der aktuell gezogene Strom I sowie die aktuelle Temperatur im Bereich des ersten Temperaturfühlers 8 gemessen. In einem Überprüfungsschritt S3 wird geprüft, ob die Turbofunktion aktiviert ist oder nicht. Ist die Turbofunktion nicht aktiviert, werden nach gewisser Zeit (Schritt S8) die Parameter N, I sowie T erneut gemessen (Schritt S2).

Ist die Turbofunktion demgegenüber aktiviert, wird in einem weiteren Schritt S4 gemessen, ob die aktuelle Drehzahl N kleiner ist als Nmax, der gemessene Strom I kleiner ist als Imax sowie die gemessene Temperatur T kleiner ist als Tmax. Falls diese Beziehungen erfüllt sind, wird in einem weiteren Schritt S5 überprüft, ob die gemessene Drehzahl kleiner ist als eine definierte Drehzahlschwelle unterhalb von Nmax. Ist dies der Fall, wird in einem weiteren Schritt S6 die Drehzahl um einen bestimmten Betrag erhöht und nach einer bestimmten Wartezeit (Schritt S7) die Messung von N, I sowie T erneut vorgenommen (Schritt S2).

Ist die Bedingung in Schritt S4 nicht erfüllt, wird in einem weiteren Schritt S9 festgestellt, ob die gemessene Drehzahl N größer ist als N0+x, wobei es sich bei x um die Größe einer Drehzahl (z. B. 100) handelt. Ist dies der Fall wird in einem Schritt S11 die zuletzt gemessene Drehzahl um die Drehzahl x (z. B. 100) reduziert und als Na im Speicher abgelegt, über einen bestimmten Zeitraum gewartet (Schritt S13) und dann erneut gemessen (Schritt S2). Ist die Bedingung in Schritt S9 nicht erfüllt, wird die untere Grenzdrehzahl N0 als die zuletzt gemessene Drehzahl in den Speicher eingeschrieben. Die Drehzahl kann hierbei nicht weiter gesenkt werden. In diesem Fall wird in einem Schritt S12 ein Warnhinweis ausgegeben, wonach der gezogene Strom I und/oder die gemessene Temperatur T zu hoch sind.

Vorzugsweise erfolgt im Rahmen der Steuerung eine selbsttätige Umschaltung von dem zweiten Betriebszustand der höheren Frequenz F2 auf den ersten Betriebszustand der niedrigeren Frequenz F1. Diese Umschaltung kann vorzugsweise unter Berücksichtigung einer zeitlichen Verzögerung t erfolgen, beispielsweise indem der Turbobetrieb bereits abgeschaltet wird, bevor der Parameter Tmax erreicht worden ist.

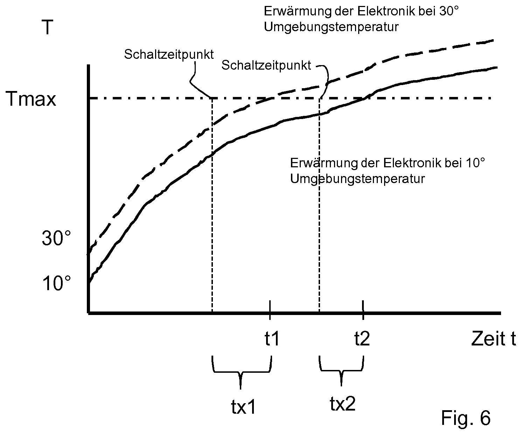

Die Umgebungstemperatur ist vorzugsweise bei der Steuerung des Elektromotors miteinzubeziehen, da die Umgebungstemperatur in Verbindung mit der durch die Verlustleistung der MOSFETs erzeugten Wärme abhängig von der Umgebungstemperatur unterschiedliche Werte erreicht, wie dies in Fig. 6 vereinfacht dargestellt ist. So muss beispielsweise bei einer Umgebungstemperatur von 30°C die Steuer- und Regeleinheit 7 bereits erheblich früher eingreifen als bei einer Umgebungstemperatur von 10°C, wie sich dies aus Fig. 6 ergibt. Die Schaltzeitpunkte sind hierbei unter Berücksichtigung einer zeitlichen Verzögerung tx zu wählen, derart, dass auch nach einem Abschaltvorgang sich das System aufgrund seiner thermodynamischen Trägheit noch geringfügig zusätzlich erwärmen kann, ohne dass die Maximaltemperatur überschritten wird. Eine entsprechende zeitliche Verzögerung ist aus Fig. 6 ebenfalls ersichtlich.

Fig. 7 zeigt einen Teil der Anzeigevorrichtung 10 des erfindungsgemäßen Arbeitsgeräts 1. Die Anzeigevorrichtung 10 umfasst eine Leistungsanzeigevorrichtung 10a, welche eine Mehrzahl von Feldern aufweist, die nach Art eines Balkendiagramms die aktuelle Leistung aufzeigen. Zusätzlich zu den Balken, die durch Beleuchtung und/oder Farbgebung angezeigt werden, kann in dem jeweiligen Segment der Balkenanzeige auch eine numerische Zahl, die den aktuellen Leistungswert in Prozent zeigt, wiedergegeben werden. Der Bereich 25 entspricht z.B. einem Druck von 175 bar, der Bereich 50 einem Druck von 350 bar, der Bereich 75 einem Druck von 525 bar, der Bereich 100 einem Druck von 700 bar.

Im Rahmen der Steuerung des Elektromotors 3 wird hierbei zusätzlich eine Funktionalität zur Verfügung gestellt, die der Bedienungsperson aufzeigt, wann ein Bearbeitungsschritt, z.B. ein Schnitt abgebrochen werden soll. Dies kann zweckmäßigerweise dadurch erfolgen, dass bei Volllastbetrieb die Leistungsanzeige eine Leistung von 100% aufzeigt, wobei nach Ablauf einer bestimmten Zeit die 100%-Anzeige zu blinken beginnt. Dies ist das Zeichen für die Bedienungsperson, einen neuen Bearbeitungszyklus zu starten.

Zusätzlich kann an der Anzeigeeinrichtung 10 auch noch eine Betriebszustandsanzeige 10b vorgesehen sein, die zeigt, ob der Turbobetrieb aktiviert ist oder nicht. Zusätzlich oder alternativ hierfür kann auch noch eine Temperaturanzeige 10c, beispielsweise in Form eines alphanumerischen Displays oder einer Balkenanzeige, vorgesehen sein.

### BEZUGSZEICHENLISTE

- 1: Arbeitsgerät
- 2: Hydraulikpumpe
- 3: Elektromotor
- 4: Hydraulikzylinder
- 5: Kolbenstange
- 6: Steuerventil
- 7: Steuer- und Regeleinheit
- 8: erster Temperaturfühler
- 9: zweiter Temperaturfühler
- 10: Anzeigeeinrichtung
- 10a: Lastanzeige
- 10b: Betriebszustandsanzeige
- 10c: Temperaturanzeige
- 10d: Anzeigeeinrichtung
- 11: Werkzeughälften
- 12: Gehäuse
- 13: Ein-/Ausschalter
- 14: Display
- 15: erster Handgriff
- 16: zweiter Handgriff
- 17: Ausgleichseinrichtung
- 18: Akku
- 19: Hydrauliktank
- 20: Mikrocontroller
- 21: Frequenzumrichter
- 22: Stromdetektor
- 23a: Steuerleitung
- 23b: Steuerleitung
- 24a: erster Knotenpunkt
- 24b: zweiter Knotenpunkt
- 25: Rückschlagventil
- 26: Lasthalteelement
- 27a: Entlastungsventil
- 27b: Entlastungsventil
- 28: Platine
- 29: Sterngriff
- 30a: Sicherheitsventil
- 30b: Sicherheitsventil
- 31: Steuerleitung
- 32: Steuerleitung
- 33: Tankleitung

- A: gezogener Strom
- F1: Frequenz
- F2: Frequenz
- HD: Hochdruck
- ND: Niederdruck
- t: zeitliche Verzögerung
- T: Umgebungstemperatur
- SW: Strombedarf-Schwellwert

## Patentansprüche

1. Tragbares Arbeitsgerät (1), wie z.B. Spreizgerät, Schneidgerät oder Kombigerät mit Schneid- sowie Spreizfunktion, für den portablen Einsatz mit
einem Elektromotor (3),
einem am Arbeitsgerät (1) untergebrachten Akku (18),
einer hydraulisch angetriebenen, verfahrbarer Kolbenstange (5) zum Verrichten von Arbeit, insbesondere Spreizarbeit und/oder Schneidarbeit und/oder Hebe- bzw. Drückarbeit, sowie
einer elektronischen Steuer- und Regeleinheit (7) zur Steuerung und/oder Regelung des Elektromotors (3),
wobei als Elektromotor (3) ein bürstenloser Gleichstrommotor vorgesehen ist,
wobei die elektronische Steuer- und Regeleinheit (7) einen ersten Betriebszustand festlegt, bei dem der Elektromotor (3) mit einer ersten Frequenz F1 betrieben wird,
die elektronische Steuer- und Regeleinheit (7) einen zweiten Betriebszustand festlegt, bei dem der Elektromotor (3) mit einer zweiten Frequenz F2 betrieben wird,
wobei mittels manuell bedienbarer Umschaltmittel des Arbeitsgeräts (1) der Betriebszustand von der Bedienungsperson des Arbeitsgeräts (1) zwischen erstem und zweitem Betriebszustand umschaltbar ist,
wobei die Drehzahl des Elektromotors (3) bei der zweiten Frequenz F2 höher ist als bei der ersten Frequenz F1,
wobei ein Steuerventil (6) für das Umschalten der Bewegungsrichtung der Kolbenstange vorgesehen ist und mit Betätigung des Steuerventils (6) auch die Umschaltung des Betriebszustands zwischen erstem und zweitem Betriebszustand erfolgt, **dadurch gekennzeichnet, dass**
durch Umschaltung auf die zweite Frequenz T2 in einen Turbobetrieb umgeschaltet wird, bei dem die Kolbenstange (5) schneller aus- bzw. eingefahren wird und
die Möglichkeit der Umschaltung von der ersten Frequenz F1 auf die zweite Frequenz F2 strombedarfsabhängig ist.

2. Arbeitsgerät nach Anspruch 1, **dadurch gekennzeichnet, dass** das Umschalten von der ersten Frequenz F1 auf die zweite Frequenz F2 nur in einem Teilbereich des gesamten Leistungsspektrums des Elektromotors (3) möglich ist.

3. Arbeitsgerät nach Anspruch 1 oder 2, **dadurch gekennzeichnet, dass** die Drehzahl des Elektromotors (3) bei der ersten Frequenz F1 sowie zweiten Frequenz F2 jeweils konstant ist.

4. Arbeitsgerät nach mindestens einem der vorhergehenden Ansprüche, **dadurch gekennzeichnet, das** ein Strombedarf-Schwellwert SW vorgegeben ist, oberhalb dessen das Umschalten von der ersten Frequenz F1 auf die zweite Frequenz F2 oder ein Betrieb des Arbeitsgeräts bei der zweiten Frequenz F2 nicht möglich ist.

5. Arbeitsgerät nach Anspruch 1, **dadurch gekennzeichnet, dass** es sich bei dem Steuerventil (6) um ein Drehventil handelt und die Auslösung der Umschaltung des Betriebszustands zwischen erstem und zweitem Betriebszustand durch Drehen des Steuerventils (6) um einen zusätzlichen Winkelbereich Δα erfolgt.

6. Arbeitsgerät nach mindestens einem der vorhergehenden Ansprüche, **dadurch gekennzeichnet, dass** die während des Betriebs durch den gezogenen Strom A des Elektromotors (3) entstehende Wärme W erfasst und zusätzlich als Steuerungsvariable verwendet wird.

7. Arbeitsgerät nach mindestens einem der vorhergehenden Ansprüche, **dadurch gekennzeichnet, dass** die während des Betriebs durch den gezogenen Strom des Elektromotors (3) entstehende Wärme W im lokalen Bereich der elektronischen Steuer- und Regeleinheit (7) erfasst wird.

8. Arbeitsgerät nach mindestens einem der vorhergehenden Ansprüche, **dadurch gekennzeichnet, dass** ein erster Temperaturfühler (8) vorgesehen ist, der die während des Betriebs durch den gezogenen Strom des Elektromotors (3) entstehende Wärme W erfasst.

9. Arbeitsgerät nach mindestens einem der vorhergehenden Ansprüche, **dadurch gekennzeichnet, dass** die Umgebungstemperatur T erfasst und bei der Steuerung mit einbezogen wird.

10. Arbeitsgerät nach mindestens einem der vorhergehenden Ansprüche, **dadurch gekennzeichnet, dass** ein zweiter Temperaturfühler (9) vorgesehen ist.

11. Arbeitsgerät nach mindestens einem der vorhergehenden Ansprüche, **dadurch gekennzeichnet, dass** die Steuerung des Elektromotors (3) auf Basis des gezogenen Stroms A, der durch den gezogenen Strom A des Elektromotors (3) entstehenden Wärme W und/oder Umgebungstemperatur T erfolgt.

12. Arbeitsgerät nach mindestens einem der vorhergehenden Ansprüche, **dadurch gekennzeichnet, dass** im Rahmen der Steuerung eine selbsttätige Umschaltung von dem zweiten auf den ersten Betriebszustand oder eine Abschaltung erfolgt.

13. Arbeitsgerät nach Anspruch 12, **dadurch gekennzeichnet, dass** die Umschaltung unter Berücksichtigung einer zeitlichen Verzögerung t erfolgt.

14. Arbeitsgerät nach mindestens einem der vorhergehenden Ansprüche, **dadurch gekennzeichnet, dass** eine Anzeigeeinrichtung (10) vorgesehen ist, die Folgendes umfasst
eine Lastanzeige (10a), bei der die Leistung des Arbeitsgeräts auf der Grundlage des während des Betriebs vom Elektromotor (3) gezogenen Stroms A angezeigt wird, und/oder
eine Betriebszustandsanzeige (10b), die zeigt, dass sich das Arbeitsgerät im zweiten Betriebszustand befindet, und/oder
eine Betriebszustandsanzeige, die zeigt, dass die Dauer der Maximalleistung überschritten ist, und/oder
eine Temperaturanzeige (10c), die zeigt, in welchem Bereich sich die aktuelle Betriebstemperatur der Halbleiterbauelemente befindet.

15. Arbeitsgerät nach Anspruch 14, **dadurch gekennzeichnet, dass** die Lastanzeige (10a) einen Warnmodus hat, der aufzeigt, dass das Arbeitsgerät (1) sich im Überlastbereich befindet und der Arbeitsvorgang unterbrochen werden muss.

16. Arbeitsgerät nach mindestens einem der vorhergehenden Ansprüche, **dadurch gekennzeichnet, dass** das Arbeitsgerät (1) Folgendes umfasst:
eine Hydraulikpumpe (2) und/oder
einen Hydrauliktank (19) und/oder
einen Hydraulikzylinder (4) zur Aufnahme der verfahrbaren Kolbenstange (5) und/oder
Hydraulikleitungen und/oder
eine Ausgleichseinrichtung (17).

## Claims

1. Portable implement (1), such as for example an expander, cutter or combination device with a cutting and expanding function, for portable use, having
an electric motor (3),
a battery (18) accommodated on the implement (1),
a hydraulically driven displaceable piston rod (5) for performing work, in particular expanding work and/or cutting work and/or lifting or compressing work, and
an electronic control and regulation unit (7) for controlling and/or regulating the electric motor (3),
wherein provision is made for a brushless DC motor as electric motor (3),
wherein the electronic control and regulation unit (7) defines a first operating state in which the electric motor (3) is operated at a first frequency F1,
the electronic control and regulation unit (7) defines a second operating state in which the electric motor (3) is operated at a second frequency F2,
wherein it is possible for the operator of the implement (1) to switch the operating state between the first and second operating state by way of manually operable switching means of the implement (1),
wherein the speed of the electric motor (3) at the second frequency F2 is higher than at the first frequency F1,
wherein provision is made for a control valve (6) for switching the direction of movement of the piston rod and the operating state is also switched between the first and second operating state when the control valve (6) is actuated, **characterized in that**
switching to the second frequency F2 causes switching to a turbo mode in which the piston rod (5) is extended and retracted more quickly and
the option to switch from the first frequency F1 to the second frequency F2 depends on a current demand.

2. Implement according to Claim 1, **characterized in that** it is possible to switch from the first frequency F1 to the second frequency F2 only in a subregion of the overall power spectrum of the electric motor (3).

3. Implement according to Claim 1 or 2, **characterized in that** the speed of the electric motor (3) at the first frequency F1 and second frequency F2 is constant in each case.

4. Implement according to at least one of the preceding claims, **characterized in that** a current demand threshold value SW is predefined, above which it is not possible to switch from the first frequency F1 to the second frequency F2 or to operate the implement at the second frequency F2.

5. Implement according to Claim 1, **characterized in that** the control valve (6) is a rotary valve and the switching of the operating state between the first and second operating state is triggered by rotating the control valve (6) about an additional angular range Δα.

6. Implement according to at least one of the preceding claims, **characterized in that** the heat W produced during operation by the current A drawn by the electric motor (3) is detected and additionally used as control variable.

7. Implement according to at least one of the preceding claims, **characterized in that** the heat W produced during operation by the current drawn by the electric motor (3) is detected in the local region of the electronic control and regulation unit (7).

8. Implement according to at least one of the preceding claims, **characterized in that** provision is made for a first temperature sensor (8) that detects the heat W produced during operation by the current drawn by the electric motor (3).

9. Implement according to at least one of the preceding claims, **characterized in that** the ambient temperature T is detected and jointly incorporated into the control.

10. Implement according to at least one of the preceding claims, **characterized in that** provision is made for a second temperature sensor (9).

11. Implement according to at least one of the preceding claims, **characterized in that** the electric motor (3) is controlled on the basis of the drawn current A, of the heat W produced by the current A drawn by the electric motor (3) and/or ambient temperature T.

12. Implement according to at least one of the preceding claims, **characterized in that** automatic switching from the second to the first operating state or deactivation takes place in the course of the control.

13. Implement according to Claim 12, **characterized in that** the switch takes place with consideration to a time delay t.

14. Implement according to at least one of the preceding claims, **characterized in that** provision is made for a display apparatus (10) that comprises the following
a load display (10a), in which the power of the implement is displayed on the basis of the current A drawn by the electric motor (3) during operation, and/or
an operating state display (10b) that shows that the implement is in the second operating state, and/or
an operating state display that shows that the duration of maximum power is exceeded, and/or
a temperature display (10c) that shows the range in which the current operating temperature of the semiconductor components is located.

15. Implement according to Claim 14, **characterized in that** the load display (10a) has a warning mode that indicates that the implement (1) is in the overload range and the operating process should be interrupted.

16. Implement according to at least one of the preceding claims, **characterized in that** the implement (1) comprises the following:
a hydraulic pump (2) and/or
a hydraulic tank (19) and/or
a hydraulic cylinder (4) for receiving the displaceable piston rod (5) and/or
hydraulic lines and/or
an equalization apparatus (17).

## Revendications

1. Appareil de travail portatif (1), comme par exemple un appareil d'écartement, un appareil de découpe ou un appareil combiné ayant une fonction de découpe et d'écartement, destiné à une utilisation portable et comprenant un moteur électrique (3),
un accumulateur (18) monté sur l'appareil de travail (1), une tige de piston (5) à entraînement hydraulique, déplaçable, destinée à accomplir un travail, notamment un travail d'écartement et/ou un travail de découpe et/ou un travail de levage ou de pressage, et
une unité électronique de commande et de régulation (7) destinée à commander et/ou à réguler le moteur électrique (3),
dans lequel il est prévu en tant que moteur électrique (3) un moteur à courant continu sans balais,
dans lequel l'unité électronique de commande et de régulation (7) fixe un premier état de fonctionnement dans lequel le moteur électrique (3) fonctionne à une première fréquence F1,
l'unité électronique de commande et de régulation (7) fixe un deuxième état de fonctionnement dans lequel le moteur électrique (3) fonctionne à une deuxième fréquence F2,
dans lequel l'état de fonctionnement peut être permuté par l'opérateur de l'appareil de travail (1) entre le premier et le deuxième état de fonctionnement à l'aide d'un moyen de permutation actionnable manuellement de l'appareil de travail (1),
dans lequel la vitesse de rotation du moteur électrique (3) est plus élevée à la deuxième fréquence F2 qu'à la première fréquence F1,
dans lequel il est prévu une soupape de commande (6) destinée à la permutation du sens de déplacement de la tige de piston et l'actionnement de la soupape de commande (6) entraîne également la permutation de l'état de fonctionnement entre le premier et le deuxième état de fonctionnement, **caractérisé en ce que**
la permutation à la deuxième fréquence T2 permet de passer à un mode de fonctionnement turbo, dans lequel la tige de piston (5) est sortie ou rentrée plus rapidement et
la possibilité de permutation de la première fréquence F1 à la deuxième fréquence F2 est fonction de la demande de courant.

2. Appareil de travail selon la revendication 1, **caractérisé en ce que** la permutation de la première fréquence F1 à la deuxième fréquence F2 n'est possible que dans une plage partielle de l'ensemble du spectre de puissance du moteur électrique (3).

3. Appareil de travail selon la revendication 1 ou 2, **caractérisé en ce que** la vitesse de rotation du moteur électrique (3) est respectivement constante à la première fréquence F1 et à la deuxième fréquence F2.

4. Appareil de travail selon au moins l'une des revendications précédentes, **caractérisé en ce qu'**on prédéfinit une valeur de seuil de demande de courant SW au-dessus de laquelle la permutation de la première fréquence F1 à la deuxième fréquence F2 ou un fonctionnement de l'appareil de travail à la deuxième fréquence F2 n'est pas possible.

5. Appareil de travail selon la revendication 1, **caractérisé en ce que** la soupape de commande (6) est une soupape rotative et **en ce que** le déclenchement de la permutation de l'état de fonctionnement entre le premier et le deuxième état de fonctionnement s'effectue par rotation de la soupape de commande (6) sur une plage angulaire supplémentaire Δα.

6. Appareil de travail selon au moins l'une des revendications précédentes, **caractérisé en ce que** la chaleur W dégagée pendant le fonctionnement par l'appel de courant A du moteur électrique (3) est détectée et utilisée en tant que variable de commande supplémentaire.

7. Appareil de travail selon au moins l'une des revendications précédentes, **caractérisé en ce que** la chaleur W dégagée pendant le fonctionnement par l'appel de courant du moteur électrique (3) est détectée dans la zone locale de l'unité électronique de commande et de régulation (7).

8. Appareil de travail selon au moins l'une des revendications précédentes, **caractérisé en ce qu'**il est prévu un premier capteur de température (8) qui détecte la chaleur W dégagée pendant le fonctionnement par l'appel de courant du moteur électrique (3).

9. Appareil de travail selon au moins l'une des revendications précédentes, **caractérisé en ce que** la température ambiante T est détectée et prise en compte lors de la commande.

10. Appareil de travail selon au moins l'une des revendications précédentes, **caractérisé en ce qu'**il est prévu un deuxième capteur de température (9).

11. Appareil de travail selon au moins l'une des revendications précédentes, **caractérisé en ce que** la commande du moteur électrique (3) est effectuée sur la base de l'appel de courant A, de la chaleur W dégagée par l'appel de courant A du moteur électrique (3) et/ou de la température ambiante T.

12. Appareil de travail selon au moins l'une des revendications précédentes, **caractérisé en ce que**, dans le cadre de la commande, il est procédé à une permutation automatique du deuxième au premier état de fonctionnement ou à une déconnexion.

13. Appareil de travail selon la revendication 12, **caractérisé en ce que** la permutation s'effectue en tenant compte d'un temps de retard t.

14. Appareil de travail selon au moins l'une des revendications précédentes, **caractérisé en ce qu'**il est prévu un dispositif d'affichage (10) comprenant
un indicateur de charge (10a), au moyen duquel la puissance de l'appareil de travail est indiquée sur la base du courant A appelé par le moteur électrique (3) pendant le fonctionnement, et/ou
un indicateur d'état de fonctionnement (10b) qui indique que l'appareil de travail se trouve dans le deuxième état de fonctionnement, et/ou
un indicateur d'état de fonctionnement qui indique que la durée de la puissance maximale est dépassée, et/ou un indicateur de température (10c) qui indique dans quelle plage se trouve la température de fonctionnement actuelle des composants à semi-conducteurs.

15. Appareil de travail selon la revendication 14, **caractérisé en ce que** l'indicateur de charge (10a) possède un mode d'avertissement qui indique que l'appareil de travail (1) se trouve dans la zone de surcharge et que le processus de travail doit être interrompu.

16. Appareil de travail selon au moins l'une des revendications précédentes, **caractérisé en ce que** l'appareil de travail (1) comprend :
une pompe hydraulique (2) et/ou
un réservoir hydraulique (19) et/ou
un cylindre hydraulique (4) destiné à recevoir la tige de piston mobile (5) et/ou
des conduits hydrauliques et/ou
un dispositif de compensation (17).
